Europäisches Patentamt

**European Patent Office**

**Office européen des brevets**

(19)

(11) Veröffentlichungsnummer: **0 016 955**
**B1**

(12) ## EUROPÄISCHE PATENTSCHRIFT

(45) Veröffentlichungstag der Patentschrift:
**12.05.82**

(51) Int. Cl.³: **H 01 M 10/42**

(21) Anmeldenummer: **80100902.8**

(22) Anmeldetag: **25.02.80**

(54) **Verfahren und Vorrichtung zur Prüfung geladener und trocken lagerfähiger Bleiakkumulatoren.**

(30) Priorität: **02.04.79 DE 2913190**

(43) Veröffentlichungstag der Anmeldung:
**15.10.80 Patentblatt 80/21**

(45) Bekanntmachung des Hinweises auf die Patenterteilung:
**12.05.82 Patentblatt 82/19**

(84) Benannte Vertragsstaaten:
**AT BE CH FR GB IT NL SE**

(56) Entgegenhaltungen:
**US-A-3 005 943**
**US-A-3 082 371**
**US-A-3 764 893**
**US-A-3 956 720**

(73) Patentinhaber: **VARTA Batterie Aktiengesellschaft, Am Leineufer 51, D-3000 Hannover 21 (DE)**

(72) Erfinder: **Golz, Hans-Joachim, Dr., Kniggestrasse 1, D-3000 Hannover (DE)**
Erfinder: **Bauck, Uwe, Calenbergerstrasse 9, D-3008 Garbsen 1 (DE)**

(74) Vertreter: **Kaiser, Dieter Ralf, Dipl.-Ing., Gundelhardtstrasse 72, D-6233 Kelkheim/Ts. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Verfahren und Vorrichtung zur Prüfung geladener und trocken lagerfähiger Bleiakkumulatoren

Die Erfindung betrifft ein Verfahren zur Prüfung geladener und trocken lagerfähiger Bleiakkumulatoren auf Polarität, Kurzschluß und Unterbrechung.

Seitdem es möglich geworden war, die negativen Elektrodenplatten von Bleiakkumulatoren nach dem Aufladen durch eine konservierende Behandlung auch außerhalb des Säureelektrolyten im geladenen Zustand zu erhalten, konnten insbesondere Starterbatterien in großen Stückzahlen lieferfertig, jedoch ohne Elektrolyt, auf Lager genommen werden. Zugleich entstand das Bedürfnis, bereits an den ungefüllten Akkumulatorenzellen mit geladenen Elektrodenplatten Prüfungen vorzunehmen, um den korrekten Einbau der Platten, die richtige Polung oder das Fehlen von Kurzschlüssen zu kontrollieren und damit späteren Reklamationen durch den Kunden vorzubeugen. Denn vorhandene Fehler werden erst offenbar, nachdem die Batterien durch Füllung mit dem Elektrolyten aktiviert sind. Sie zeigen sich dann in einer um 2 V, 4 V usw. verminderten Sollspannung, wenn beispielsweise eine oder mehrere Zellen verkehrt herum eingebaut sind.

Fehlpolungen können so drastische Spannungsminderungen verursachen, daß das Funktionieren der elektrischen Anlage des Automobils in Frage gestellt ist. Ein solches Risiko ist immer dann gegeben, wenn der Kunde nach dem Kauf die Batterie selbst füllt und ohne weitere Spannungskontrolle nach der Montage im Fahrzeug in Betrieb nimmt.

Bekannte Methoden, um defekte Batterien zu ermitteln und gegebenenfalls auszusondern, setzen meist einen elektrolytgefüllten Zustand voraus. So wird z. B. zur Kontrolle von Kurzschlüssen in der US-A-3 764 893 vorgeschlagen, daß man einen mit Elektrolytsalz und einem Indikatorfarbstoff imprägnierten und darauf befeuchteten Papierstreifen fest an den negativen Batteriepol bzw. an beide Batteriepole andrückt und die Farbänderung beobachtet, mit der der Indikator auf das am negativen Pol generell herrschende alkalische Milieu reagiert, wobei eine besonders intensive Farbänderung auf einen Kurzschluß hindeutet. Diese Messung ist nur bei einer elektrolytgefüllten Batterie möglich.

Gemäß US-A-3 956 720 ist es ferner möglich, den Ladungszustand von Batterien mit Hilfe zweier identischer Potentialsonden zu messen, welche jeweils in den Elektrolyten zweier verschiedener, beispielsweise benachbarter Zellen des Batterieverbandes eintauchen.

Dagegen offenbart die US-A-3 082 371 eine Möglichkeit, Defekte auch an ungefüllten Batterien dadurch festzustellen, daß man mit der Batterie und einem Hochfrequenzgenerator einen Schwingkreis herstellt, in dem der Plattenblock als Kondensator fungiert. Bei ordnungsgemäßem Einbau der Platten oszilliert der Schwingkreis harmonisch, während beispielsweise ein vorhandener Kurzschluß zwischen Platten eine Änderung des kapazitiven Widerstandes und damit eine Änderung der Stromstärke bewirkt. Die Änderung wird durch Erregung eines Schaltrelais oder Aufleuchten einer Lampe signalisiert. Defekte wie schlecht verschweißte Zellenverbinder können dadurch ermittelt werden, daß an der schadhaften Stelle eine Erwärmung auftritt, die gemessen wird. Dies setzt allerdings voraus, daß der Zellenverbinder von außen zugänglich ist; bei der heute üblichen Bauweise sind die Zellenverbinder im Blockkasten angeordnet. In falscher Polung eingetauchte Zellen können bei dieser Meßmethode nicht ermittelt werden.

Der Erfindung liegt die Aufgabe zugrunde, ein einfaches Verfahren sowie Mittel zu dessen Durchführung anzugeben, die geeignet sind, geladene und trocken lagerfähige Akkumulatorenzellen auf ihren einwandfreien Fertigungszustand hin zu überprüfen.

Die Aufgabe wird erfindungsgemäß dadurch gelöst, daß einzelne Stellen der Oberflächen der Elektrodenplatten beider Polarität mit einem Material in Berührung gebracht werden, welches zwischen den Berührungsstellen eine lediglich ionenleitende Brücke herstellt und daß anschließend die Zellenspannung gemessen wird. Dabei wird der Zustand der Trockenlagerung nicht beeinträchtigt.

Liegt eine Batterie aus mehreren geladenen und trocken lagerfähigen Zellen vor, so wird ihre erst nach Füllung mit dem Elektrolyten verfügbare Batteriespannung an den Endpolen meßbar, wenn man bei allen Zellen gleichzeitig in erfindungsgemäßer Weise verfährt und jeweils zwischen zwei oder mehreren Elektroden entgegengesetzter Polarität eine ionenleitende Brücke erzeugt.

Hierzu ist es lediglich notwendig, einige diskrete Stellen von den Oberflächen der einen wie der anderen Elektrodenspezies vermittels eines elektrolytgetränkten Materials miteinander in Kontakt zu bringen und darauf zu achten, daß die Ionenleitung in dem Material über die gesamte Wegstrecke zwischen den Berührungsstellen erhalten bleibt. Eine Änderung oder Unterbrechung der Kontaktbrücke durch ein Leiterstück mit anderem Leitungscharakter, beispielsweise einem Elektronenleiter, ist unbedingt auszuschließen.

Praktisch könnte man einen mit Elektrolyt getränkten Docht verwenden, der zur Vermeidung von Säureverunreinigungen bis auf die äußersten Enden mit einem Isolierschlauch umhüllt ist und dessen Enden auf die Oberseite der Rahmen mindestens zweier in der Zelle befindlicher gegenpoliger Elektroden aufgesetzt wird. Dabei gelingt es, die elektrochemische Potentialdifferenz zwischen den Elektroden beider Polarität leistungslos zu messen, weil, wie Untersuchungen ergeben haben, die positive Rahmenoberfläche von der Formation her bereits mit $PbO_2$ bedeckt ist, die negative Masse wie der Rahmen ohnehin aus Blei bestehen und beide Rahmen nur ionenleitend überbrückt zu werden brauchen, wozu eine relativ geringe Elektrolytmenge ausreicht.

Prüft man einen geladenen, trocken lagerfähigen Akkumulator in dieser Weise, so stellt man zunächst fest, daß bei noch nicht eingesetzter Elektrolytbrücke ein an die Zellenpole angeschlossenes Röhrenvoltmeter (Digitalvoltmeter) eine fluktuierende Spannung aufweist, sofern die Zelle in Ordnung ist. Hat die Zelle einen Kurzschluß, so ist die Spannung stabil Null.

Ist die Elektrolytbrücke durch den Docht voll wirksam geworden, wird die Zellenspannung von etwas über 2 Volt vorzeichenrichtig meßbar. Ist die Zelle verkehrt herum eingebaut, erkennt man dies am falschen Vorzeichen.

Beaufschlagt man beispielsweise alle 6 Zellen einer Starterbatterie mit einem elektrolytgetränkten Material gemäß der Erfindung, so ist im Gut-Fall eine Spannung von etwas über 12 Volt mit der richtigen Polarität meßbar. Hat eine Zelle einen Kurzschluß werden 10 Volt gemessen, bei zwei Zellen mit Kurzschluß 8 Volt usw.

Ist eine Zelle falsch herum eingebaut, so bewirkt diese Zelle mit ihrer Gegenspannung eine Gesamtspannung von 8 Volt, bei zwei falsch eingebauten Zellen ist die Gesamtspannung 4 Volt usw.

Fluktuiert dagegen die Spannung nach wie vor, so ist eine Unterbrechung in den Polen oder in den Verbindern als Ursache anzunehmen.

Da die Akkumulatoren bei der Trockenlagerung bereits verdeckelt sind, muß das elektrolytgetränkte Material durch die Einfüllöffnung in jede Zelle eingeführt werden. Besonders vorteilhaft ist es, die Kontaktierung der Elektrodenplatten beider Polarität hier mit Hilfe eines pinselähnlichen Gebildes vorzunehmen, dessen Borsten aus Kapillaren bestehen, deren obere Enden in einen kleinen Elektrolytbehälter einmünden, so daß alle Kapillaren miteinander kommunizieren.

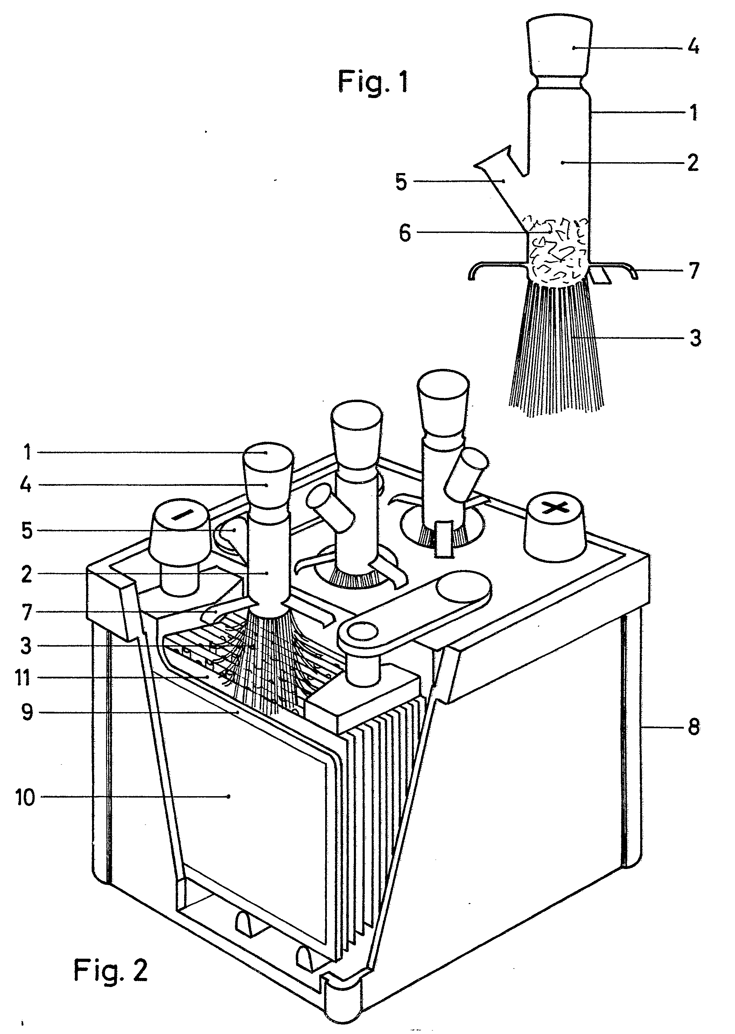

Fig. 1 zeigt ein solches pinselähnliches Gebilde 1, bestehend aus dem Behälter 2, dessen Boden in eine Vielzahl abwärts gerichteter Kapillaren oder Kanülen 3 ausläuft, dem Griffstück 4 und einem Einfüllstutzen 5 für den ionenleitenden Elektrolyten. Behälter 2 und Kanülen 3 sind vorzugsweise aus einem leicht formbaren, chemisch resistenten Kunststoff hergestellt. Der Elektrolyt kann zweckmäßig durch ein lockeres Knäuel 6 aus Glaswatte o. ä. weitgehend festgelegt sein. Mittels Halterung 7 wird der Behälter 2 über der Einfüllöffnung im Zellendeckel positioniert.

Fig. 2 gibt einen dreizelligen Bleiakkumulator 8 mit erfindungsgemäß eingerichteten Elektrolytbrücken, als welche die pinselähnlichen Gebilde 1 dienen, wieder.

Die Aufrißdarstellung der vorderen Zelle läßt erkennen, wie die Kanülen 3 sich mit ihren Spitzen über den Plattenblock ausbreiten und dabei auf die obenliegenden Oberflächen der Gitterrahmen stoßen, beispielsweise auf den Rahmen 9 der äußersten negativen Elektrode 10. Ebenso werden zwischen den gerippten Scheidern 11 alle übrigen positiven und negativen Elektroden aus der Mitte des Plattenblocks über ihre Gitterrahmen erreicht. Dabei ist eine direkte Berührung der aktiven Elektrodenmassen nicht erforderlich, da schon die durch Anformation verwandelte Oberflächenbeschaffenheit der Gitterrahmen genügt, den Zustand des geladenen Bleiakkumulators elektrochemisch zu repräsentieren. Durch die Vielzahl der Kanülen 3 wird ein den ganzen Plattenblock gleichmäßig erfassender elektrolytischer Schluß sichergestellt.

Die beschriebene Meßanordnung, bei welcher die Testelemente gemäß der Erfindung so ausgebildet sind, daß die Spannungsprüfung auch durch die Zellenöffnungen hindurch vorgenommen werden kann, erlaubt es allerdings nicht, die Lage einer fehlerhaften Zelle zu bestimmen. Auch eine Unterscheidung zwischen Kurzschluß und Verpolung ist im Zweifelsfall nicht möglich. Da die Batterie aber ohnehin unbrauchbar ist und aussortiert werden muß, kann auf eine weitergehende Fehlerdiagnose auch verzichtet werden.

Im Falle des Prüfens vor dem Verdeckeln, was für den Fertigungsablauf sinnvoll ist, kann man Zusatzinformationen dadurch abfragen, daß man Prüfspitzen mit den Zellenpolbrücken kontaktiert.

Bei entsprechender Auslegung eines elektrischen Prüfgerätes, in das auch die erfindungsgemäße Meßanordnung zu integrieren ist und das bezüglich der Ausfallkriterien programmierbar ist, kann man Fehlerart und -ort ermitteln und schließlich sogar eine Signierung vornehmen.

**Patentansprüche**

1. Verfahren zur Prüfung geladener, trocken lagerfähiger Bleiakkumulatoren auf Polarität, Kurzschluß und Unterbrechung, dadurch gekennzeichnet, daß einzelne Stellen der Oberflächen der Elektrodenplatten beider Polarität mit einem Material in Berührung gebracht werden, welches zwischen den Berührungsstellen eine lediglich ionenleitende Brücke herstellt und daß anschließend die Zellenspannung gemessen wird.

2. Vorrichtung zur Durchführung des Verfahrens nach Anspruch 1, dadurch gekennzeichnet, daß sie ein Material enthält, welches in die Akkumulatorenzelle einführbar ist und dabei mit einzelnen Stellen der Oberflächen der Elektrodenplatten beider Polarität in Berührung tritt und eine lediglich ionenleitende Brücke zwischen den Berührungsstellen bildet und daß die Zellenpole an einen Spannungsmesser angeschlossen sind.

3. Vorrichtung nach Anspruch 2, dadurch gekennzeichnet, daß das in die Zelle einführbare Material ein pinselähnliches Gebilde (1) ist, dessen Borsten aus elektrolytgefüllten Kapillaren (3) bestehen, deren obere Enden zu einem Elektrolytbehälter (2) führen, über den die Kapillaren untereinander verbunden sind.

## Claims

1. Method for testing charged, dry-storable lead storage batteries for polarity, short-circuits and breaks or disconnections, characterised in that individual points of the surfaces of the electrode plates of both polarities are brought into contact with a material which produces a simply ion-conducting bridge between the contact points, and the cell voltage is then measured.

2. Device for carrying out the method according to Claim 1, characterised in that it contains a material which can be introduced into the battery cell and thereby comes into contact with individual points of the surfaces of the elekctrode plates of both polarities and forms a simply ion-conducting bridge between the contact points, and that the cell terminals are connected to a voltmeter.

3. Device according to Claim 2, characterised in that the material which can be introduced into the cell is a brush-like body (1) whose bristles consist of capillaries (3) filled with electrolyte and whose upper ends lead to an electrolyte container (2) via which the capillaries are connected to one another.

## Revendications

1. Procédé de contrôle d'accumulateurs au plomb chargés et stockables à sec sur la polarité, l'existence d'un court-circuit et d'une interruption, caractérisé en ce que des emplacements ou points séparés de la surface des plaques électrodes des deux polarités sont mis en contact avec une matière qui établit, entre les points de contact, un pont conducteur seulement d'ions, et en ce qu'ensuite la tension d'élément est mesurée.

2. Dispositif pour l'exécution du procédé selon la revendication 1, caractérisé en ce qu'il contient une matière qui est introduisible dans l'élément d'accumulateur et vient ainsi en contact avec divers points des surfaces des plaques électrodes des deux polarités et forme un pont uniquement conducteur d'ions entre les points de contact et en ce que les pôles ou bornes d'élément sont raccordés à un voltmètre ou instrument analogue de mesure de tension.

3. Dispositif selon la revendication 2, caractérisé en ce que la matière, insérable dans l'élément, est une structure semblable à un pinceau (1) dont les poils sont constitués par des tubes capillaires (3) remplis d'électrolyte, dont les extrémités supérieures mènent à un réservoir d'électrolyte (2) par l'intermédiaire duquel les tubes capillaires sont reliés entre eux.

Fig. 1

Fig. 2